# EUROPEAN PATENT APPLICATION

(11) **EP 4 678 830 A1**
(43) Date of publication of application: **14.01.2026**
(21) Application number: 24382753.2
(22) Date of filing: 12.07.2024
(51) Int. Cl.: E03B 3/02, F24S 25/12, E04D 13/00

(54) **SOLAR COLLECTOR STRUCTURE WITH WATER COLLECTOR**

(71) Applicant: Sun Support S.L., 18518 Jerez del Marquesado Granada (ES)
(72) Inventor: García Puga, Alejandro, 18518 Jerez del Marquesado (ES)
(74) Representative: Pons IP

(57) **Abstract**

The present invention relates to a structure designed to support a solar collector and additionally incorporate a water collector. The structure comprises a plurality of posts (1) arranged longitudinally in pairs, structural elements (2, 3, 4, 5, 6) that, when joined, form a longitudinal base with a V-shaped cross-section fixed to the posts (1), a channel (8) fixed to the structural elements (2, 3, 4, 5, 6) and located between each pair of adjacent solar panels (7), a gutter (9) with openings located beneath the vertex formed by the two rows of solar panels (7) and fixed to a plurality of channels (8), a support clip (10) with a fastening clip (13) and a screw that secures the solar panels (7) to the channels (8), and a container (15) located beneath the openings for collecting water from the gutter (9).

## Description

### OBJECT OF THE INVENTION

The present invention relates to a structure designed to house a solar energy collection installation that simultaneously has the capacity for water collection.

### BACKGROUND OF THE INVENTION

In the state of the art, energy generating installations using renewable energy generation devices are known, whether through solar collectors or wind turbines, the most used on land, or any other type.

These installations are normally focused on energy generation to be commercialized, either through large installations, or through installation at the individual level in a home to reduce personal consumption.

However, originally renewable energy installations were focused on self-sufficiency, so that areas where the electrical grid was not accessible could have electricity supply.

In rural areas, the implementation of these energy generation installations is usually combined to maximize generation. In this way, they not only incorporate solar panels, but also wind turbines.

Although energy generation may be sufficient for self-sufficiency, an additional problem that is recurrent in rural areas is related to potable water supply

Potable water supply in rural areas is usually obtained through the installation of windmills. However, each area has conditions that may be more appropriate for a specific form of obtaining water, such as rainwater collection, condensation collection, or even extraction of moisture from the air.

### DESCRIPTION OF THE INVENTION

The structure of the invention is focused on the location of a solar collector that can be dedicated to solar energy generation and, at the same time, on the arrangement of a water collector.

The collected water can come from both the rain falling on the solar panels and the condensation that occurs on the panels due to humidity in the environment.

The invention is focused on a structure designed to support solar panels that, at the same time, serves to collect water. In this way, it is possible for a rural area to be self-sufficient in terms of exploitation resources, not only energetically, but also in terms of the need for water for irrigation.

A characteristic of the structure of the invention is its configuration. It is well known that a solar collector is usually formed by an axis oriented in a north-south direction on which solar panels are fixed that are oriented perpendicularly, in an east-west direction. Even when the solar collector has movement capability, incorporating a solar tracker, the solar panels are equipped with movement to be able to orient themselves from east to west, following the sun's movement to try to be oriented as perpendicular to the sun's rays as possible.

However, in the case of the invention, this is not so. The fact of incorporating an axis with solar panels means that the installation does not have the capacity to store water in addition to the stability not being adequate to function completely autonomously and it is necessary to have to be aware of possible corrections or solve problems due to various types of breakdowns.

For this reason, the solar collector of the invention has two axes with solar panels in vertical configuration, forming two rows joined together. The panels of the rows are facing each other in symmetry, oriented in opposite directions and with an angle of inclination, forming a V configuration. This configuration is preferred because the union of the two rows of solar panels generates a structure with much superior solidity that allows total security in terms of the stability of the structure and greater efficiency in water collection.

To prevent one row of solar panels from facing the sun while the others face the opposite direction, resulting in low efficiency in the installation, it has been considered that an optimal orientation for the panels is a direction rotated 90 degrees.

In this way, the rows of the collector are oriented in an east-west direction, while the solar panels are oriented in a north-south direction. This allows the sun to move along the junction of the two rows of solar panels throughout the entire solar movement, resulting in a constant energy output during the day compared to the conventional setup, which achieves a higher power peak for a short period of the day.

As a summary, the present invention is described below. It is a solar collector structure with water collector that comprises:
- a plurality of posts located longitudinally in pairs,
- constructive elements that, when joined, configure a longitudinal base with V-shaped cross-section fixed to the posts,
- a drainage channel fixed to the constructive elements and located between each two contiguous solar panels,
- a gutter with holes located under the vertex configured by the two rows of 20 solar panels and fixed to a plurality of gutters,
- a support clamp with a fixing clip and a screw that fixes the solar panels to the gutters, and
- at least one container located under the holes for collecting water from the gutter.

The structure can also comprise conduits fixed to the holes of the gutter to direct the water collected by the gutter to the different containers.

The container can be a rigid element, usually plastic, but it can also be a bag that can be attached to a support structure.

Regarding the constructive elements used to form the structure, the structure of the invention can comprise the following:
- a crossbeam that joins each pair of posts transversely,
- a longitudinal reinforcement that joins two consecutive crossbeams of each row,
- longitudinal beams, for fixing the solar panels,
- an inclined beam, for supporting the longitudinal beams, and
- an inclined section, for supporting the inclined beams.

### DESCRIPTION OF THE DRAWINGS

To complement the description being made and with the aim of helping to better understand the characteristics of the invention, in accordance with a preferred example of practical realization of the same, a set of drawings is attached as an integral part of said description, where for illustrative and non-limiting purposes, the following has been represented:
Figure 1.- Shows a perspective view of the structure of the invention.
Figure 2.- Shows a view of the structure in figure 1 with the solar panels incorporated, although transparent, so as not to hide the structure.
Figure 3.- Shows an enlarged view of one end of figure 2.
Figure 4.- Shows a perspective view of the structure in figure 2 seen from below.
Figure 5.- Shows a front view of the structure in figure 2.
Figure 6.- Shows a perspective view of the support clamp for the solar panels in the 25 structure.
Figure 7.- Shows a sectional view of the union of two solar panels to the gutter using the support clamp and the fixing clip screwed to the clamp.
Figure 8.- Shows a perspective view of the structure with the solar panels from figure 2 incorporating a conduit connected to the gutter for collecting water in a container.

Below is a list of the different elements represented in the figures with the numerical references associated with them:
1. Post.
2. Crossbeam.
3. Longitudinal reinforcement.
4. Inclined section.
5. Inclined beam.
6. Longitudinal beam.
7. Solar panel.
8. Drainage channel.
9. Gutter.
10. Support clamp.
11. Base of the support clamp.
12. Legs of the support clamp.
13. Fixing clip.
14. Conduit.
15. Container.

### PREFERRED EMBODIMENT OF THE INVENTION

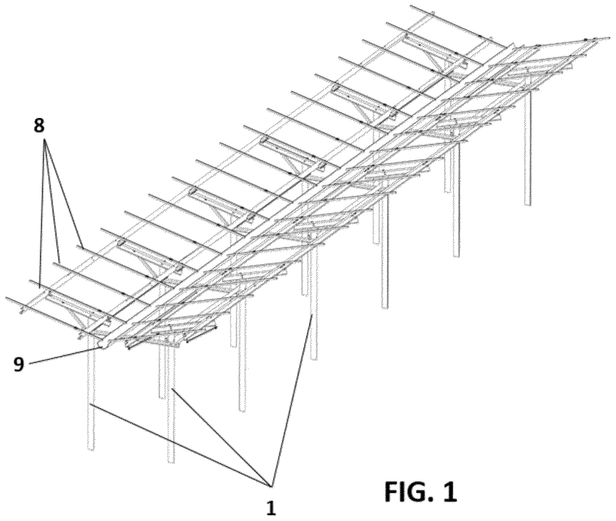

Figure 1 represents the structure of the invention in a preferred form of realization.

As can be seen, the structure is configured by two rows of posts (1) fixed to the ground and separated by a certain distance, forming pairs of posts (1) that are also aligned transversely.

Each pair of posts (1) is joined by a crossbeam (2) and, every two crossbeams (2) are joined by a longitudinal reinforcement (3). This base configuration provides dimensional stability to the structure, forming a quadrilateral with four legs.

At each end of the crossbars (2), an inclined section (4) is fixed at one end. At the other end, the inclined section (4) is attached to an inclined beam (5), which is also fixed to the corresponding post (1).

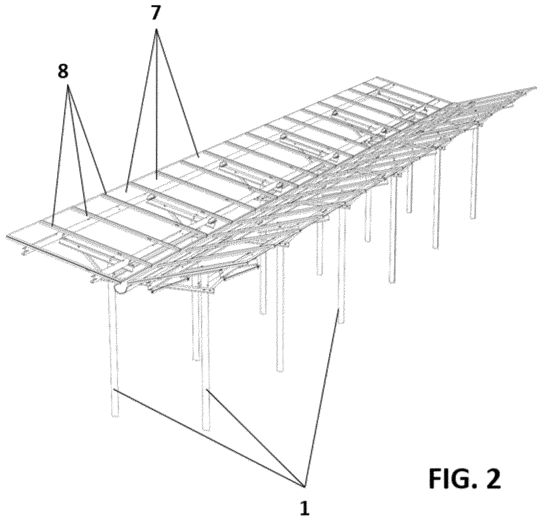

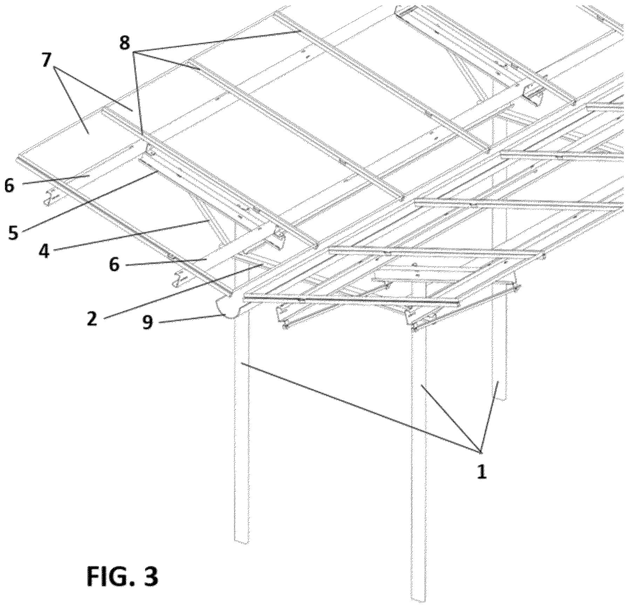

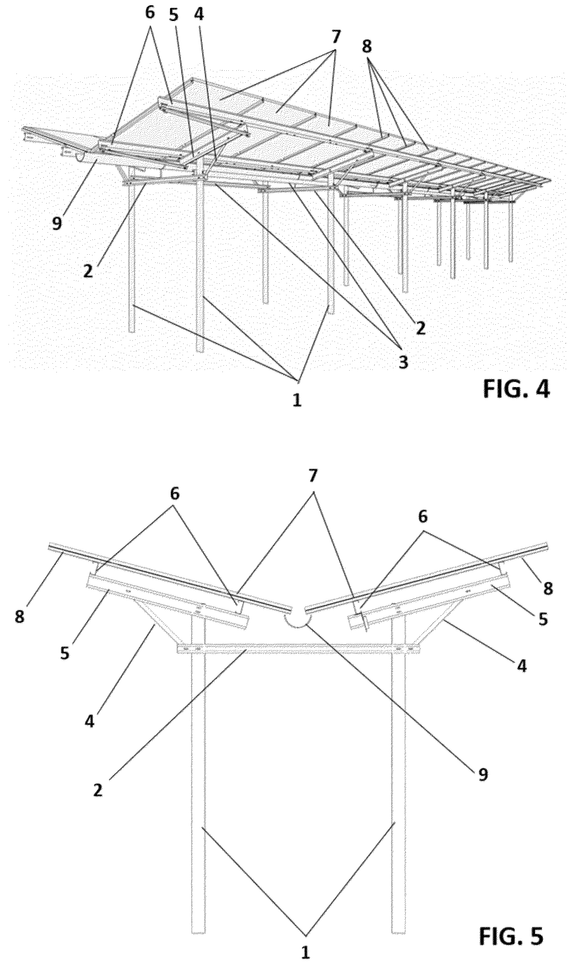

At the ends of the inclined beams (5), respective longitudinal beams (6) are attached. These longitudinal beams (6) are designed to hold the solar panels (7) for which the structure of the invention is intended, as can be clearly seen in Figures 2 to 4.

With the current configuration of the structure, a support for the placement of solar panels (7) has been created.

The next structure to be described incorporates the elements responsible for water collection, such as the drainage channels (8) and the gutter (9).

Initially, there are some channels (8) that are fixed transversely between the two longitudinal beams (6) of each post (1). These channels (8) are positioned along the entire length of the longitudinal beams (6) and are spaced at a distance equal to the width of the solar panel (7) to be installed on the structure. In this way, the solar panels (7) are secured between the middle of two consecutive channels (8). The purpose of this configuration is to prevent gaps between the solar panels from becoming cracks through which collected water could be lost.

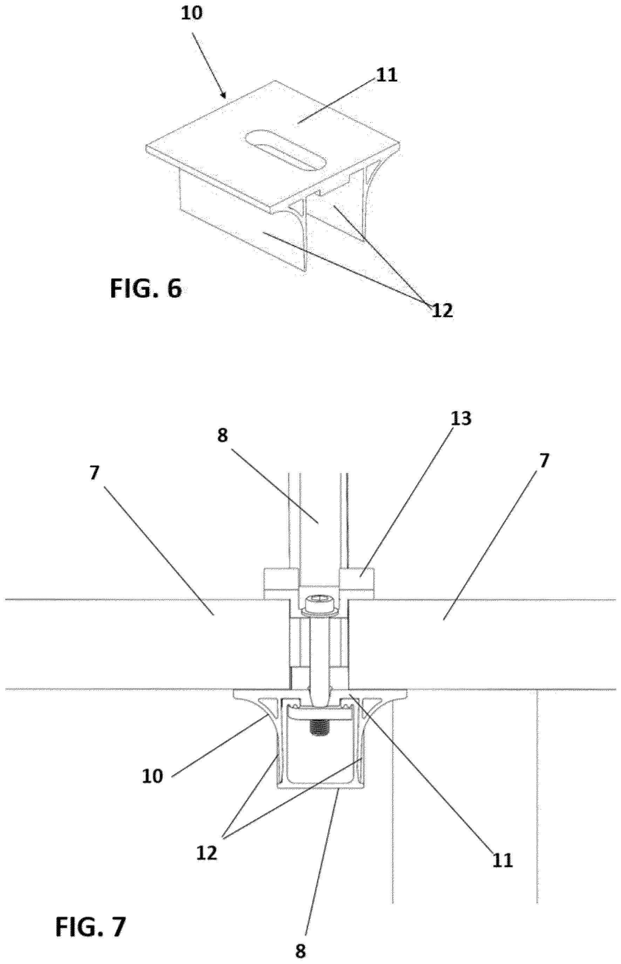

The channels (8) also serve to secure the solar panels (7) to the structure. Support clips (10), like the one shown in Figure 6, are used for this purpose. The solar panels (7) rest on these support clips (10) and are then clamped by a fastening clip (13) that is attached to the support clip (10) using a screw.

The support clips (10) are fixed to the channel (8) at two or three points along its length. The exact number of fixations is determined by the specific situation, with cases where only one support clip (10) is needed, and others where, due to strong prevailing winds in the area, for example, more than two may be required.

The support clip (10) has a U-shaped configuration with the base extended on both sides, meaning a base (11) with two parallel legs (12) extending from a centered area. In this way, the channel (8) is press-fitted into the clip (10), and the solar panel (7) is secured to the corresponding extension of the base (11).

Figure 7 shows two solar panels (7) secured to the structure of the invention using a clip (10) in which a channel (8) is inserted and fixed with a screw (14) to a fastening clip (13).

The channels (8), in any case, can be understood as a residual method for water collection, a way to prevent losses, and are not the primary method of collection. For this purpose, there is the gutter (9).

The gutter (9) is designed to collect the water that the solar panels (7) channel toward the vertex they form. To do this, it extends transversely beyond the edges of the solar panels (7), ensuring that all the water falling on the solar panels (7) slides off and, by gravity, falls into the gutter (9). Additionally, it is also fixed to the channels (8) near the lower end, so that the water collected by the channels (8) also flows into the gutter (9).

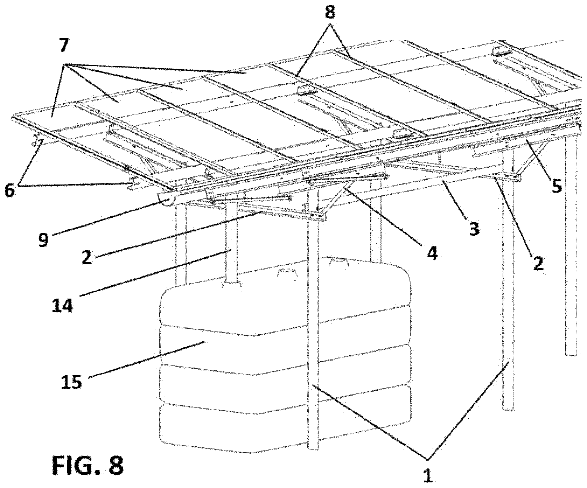

The gutter (9) also includes openings where pipes (14) are connected, through which the collected water is directed to containers (15), as shown in Figure 8.

## Claims

1. A solar collector structure with a water collector comprising:
∘ A plurality of posts (1) arranged longitudinally in pairs,
∘ Structural elements (2, 3, 4, 5, 6) that, when joined, form a longitudinal base with a V-shaped cross-section fixed to the posts (1),
∘ A channel (8) fixed to the structural elements (2, 3, 4, 5, 6) and located between each pair of adjacent solar panels (7),
∘ A gutter (9) with openings (15) located beneath the vertex formed by the two rows of solar panels (7) and fixed to a plurality of channels (8),
∘ A support clip (10) with a fastening clip (13) and a screw that secures the solar panels (7) to the channels (8), and
∘ A container (15) located beneath the openings for collecting water from the gutter (9).

2. The solar collector structure with a water collector of claim 1, further comprising a pipe (14) fixed to each opening of the gutter (9) to direct the water collected by the gutter (9) to the container (15).

3. The solar collector structure with a water collector of claim 1, wherein the container (15) is a bag.

4. The solar collector structure with a water collector of claim 1, wherein the structural elements (2, 3, 4, 5, 6) comprise:
∘ A crossbar (2) connecting each pair of posts (1),
∘ A longitudinal reinforcement (3) connecting two consecutive crossbars (2),
∘ A longitudinal beam (6) for securing the solar panels (7),
∘ An inclined beam (5) for supporting the longitudinal beams (6), and
∘ An inclined section (4) for supporting the inclined beams (5).
